# EUROPÄISCHE PATENTSCHRIFT

(11) **EP 4 029 835 B1**
(45) Veröffentlichungstag und Bekanntmachung des Hinweises auf die Patenterteilung: **09.08.2023**
(21) Anmeldenummer: 21151330.4
(22) Anmeldetag: 13.01.2021
(51) Int. Cl.: C02F 1/469, C02F 1/461, C02F 1/28

(54) **VORRICHTUNG ZUM DEIONISIEREN VON WASSER**
DEVICE FOR DEIONISING WATER
DISPOSITIF DE DÉIONISATION DE L'EAU

(43) Veröffentlichungstag der Anmeldung: 20.07.2022
(73) Patentinhaber: Robert Bosch GmbH, 70442 Stuttgart (DE)
(72) Erfinder: STEINER, Dietmar, 73642 Welzheim (DE); BOMMER, Lars, 71229 Leonberg (DE); MIELCAREK, Paul, 72667 Schlaitdorf (DE); LUCAS, Susanne, 70839 Gerlingen (DE); WAGNER, Thomas, 71229 Leonberg (DE); WANG, Ganzhou, 71229 Leonberg (DE)

(56) Entgegenhaltungen:
- US-A1- 2009 114 598
- US-A1- 2016 355 418
- US-A1- 2018 265 388
- EKANAYAKE U.G. MIHIRI ET AL: "Atmospheric-pressure plasma seawater desalination: Clean energy, agriculture, and resource recovery nexus for a blue planet", SUSTAINABLE MATERIALS AND TECHNOLOGIES, Bd. 25, 1. September 2020 (2020-09-01), Seite e00181, XP055798934, ISSN: 2214-9937, DOI: 10.1016/j.susmat.2020.e00181 Gefunden im Internet: URL:http://dx.doi.org/10.1016/j.susmat.202 0.e00181>

## Beschreibung

Die Erfindung betrifft eine Vorrichtung zum Deionisieren von Wasser und ein Betriebsverfahren für eine solche Vorrichtung.

### Stand der Technik

Aus dem Stand der Technik ist eine Vorrichtung beziehungsweise ein Verfahren zur kapazitiven Deionisierung von Wasser bekannt, bei dem Wasser durch einen Plattenkondensator mit einer ersten Elektrode und einer zweiten Elektrode geleitet wird. Eine am Kondensator beziehungsweise den Elektroden angelegte Spannung saugt die im Wasser gelösten Ionen ab.

Nachteilig an dieser Vorrichtung ist, dass die Elektroden periodisch regeneriert werden müssen. Die Elektroden können kohlenstoffbasiert sein, also Kohlenstoff und insbesondere Graphit aufweisen. Durch Oxidation der Oberflächen sowie durch eine zunehmende Verkalkung von Poren dieser Elektroden geht Kapazität verloren, bis schließlich keine Deionisierung mehr stattfindet. In kommerziellen Systemen können derzeitig aufwändige lonenaustauschmembranen sowie Reinigungszyklen mit Zitronensäureadditiven zur Verringerung der Degradation verwendet werden. Insbesondere die Zuführung von Zitronensäure, mit der der pH-Wert des zu deionisierenden Wassers gesenkt werden kann, ist jedoch mit zusätzlichen Kosten für die Zitronensäure und einem Mehraufwand durch das notwendige Auffüllen eines Säurereservoirs verbunden.

Aus der Druckschrift US 2009 / 114 598 A1 ist eine Vorrichtung zur kapazitiven Deionisierung von Wasser bekannt, bei der angeregte Ionen verwendet werden.

Die Druckschrift US 2018 / 265 388 A1 offenbart einen Plasmagenerator, mit dem Kalkablagerungen verringert werden können.

### Offenbarung der Erfindung

Eine Aufgabe der Erfindung ist es, den pH-Wert des Wassers zu senken und so die Degradation der Elektroden zu verringern, ohne Zitronensäure einsetzen zu müssen.

Diese Aufgabe wird mit den Gegenständen der unabhängigen Patentansprüche gelöst. Vorteilhafte Weiterbildungen sind in den abhängigen Patentansprüchen angegeben.

Eine Vorrichtung zum Deionisieren von Wasser weist eine Zelle mit zwei Elektroden zum kapazitiven Deionisieren von Wasser auf. Ferner weist die Vorrichtung zum Deionisieren von Wasser eine Aktivierungsvorrichtung auf, wobei mittels der Aktivierungsvorrichtung angeregte Ionen in das Wasser eingebracht werden können. Die angeregten Ionen können dabei geeignet sein, mit dem vorhandenen Wasser zu reagieren und dadurch zur neuen Spezies zu führen, die effektiv den pH-Wert des Wassers senkt. Durch den gesenkten pH-Wert kann erreicht werden, dass eine Degradation der Elektroden, insbesondere wenn sie kohlenstoffbasiert sind, reduziert wird. Dadurch kann ein ähnlicher Effekt erzielt werden wie durch das aus dem Stand der Technik bekannte Beimengen von Zitronensäure, wobei die Aktivierungsvorrichtung derart ausgestaltet sein kann, dass keine zusätzlichen Chemikalien notwendig sind.

Erfindungsgemäß weist die Aktivierungsvorrichtung einen Plasmaerzeuger auf.

Der Plasmaerzeuger ist dabei eingerichtet, einen Stoff in Form eines Plasmas bereitzustellen und in das Wasser einzubringen. Durch den Plasmaerzeuger kann eine einfache Möglichkeit bereitgestellt werden, angeregte Ionen zur Verfügung zu stellen.

Erfindungsgemäß ist der Plasmaerzeuger in einem Seitenkanal vor der Zelle angeordnet. Dies ermöglicht, einen Hauptwasserstrom durch einen Hauptkanal in die Zelle zu befördern, während im Seitenkanal nur eine geringe Menge des Wassers mit dem Plasma in Berührung kommt. Trotzdem reicht dies aus, um im Seitenkanal einen ausreichend niedrigen pH-Wert zu erzeugen, mit dem die Elektroden der Zelle geschont werden können.

In einer Ausführungsform ist der Plasmaerzeuger eingerichtet, ein Stickstoffplasma zu erzeugen. Dabei kann es vorgesehen sein, das zu deionisierende Wasser mit dem Stickstoffplasma in Nitrate und/oder Nitrite und/oder protonierte Wassermoleküle und/oder Wasserstoffperoxide umzusetzen. Alle dieser genannten Stoffe können zu einer Reduzierung des pH-Werts des Wassers führen. Durch das Stickstoffplasma werden positiv geladene Stickstoffatome und Elektroden bereitgestellt. Diese reagieren mit den Wassermolekülen und können dabei die genannten Stoffe bilden. Dadurch wird eine einfache Möglichkeit bereitgestellt, mittels angeregter Ionen den pH-Wert des Wassers zu senken und so einer Degradation der Elektroden entgegenzuwirken.

In einer Ausführungsform ist der Plasmaerzeuger eingerichtet, ein Luftplasma zu erzeugen. Dabei kann es vorgesehen sein, das zu deionisierende Wasser mit dem Luftplasma, insbesondere mit einem Anteil des in der Luft befindlichen Stickstoffs, in Nitrate und/oder Nitrite und/oder protonierte Wassermoleküle und/oder Wasserstoffperoxide umzusetzen. Alle dieser genannten Stoffe können zu einer Reduzierung des pH-Werts des Wassers führen. Durch das Stickstoffplasma werden positiv geladene Stickstoffatome und Elektroden bereitgestellt. Diese reagieren mit den Wassermolekülen und können dabei die genannten Stoffe bilden. Dadurch wird eine einfache Möglichkeit bereitgestellt, mittels angeregter Ionen den pH-Wert des Wassers zu senken und so einer Degradation der Elektroden entgegenzuwirken, deren Umsetzung weniger kostenintensiv ist als bei Verwendung eines Stickstoffplasmas.

In einer Ausführungsform ist der Seitenkanal mittels einer gekoppelten Turbinen-Pumpen-Einheit von einem Hauptkanal abgetrennt. Im Seitenkanal liegt dabei ein geringerer Druck an als im Hauptkanal, wenn die gekoppelte Turbinen-Pumpen-Einheit in Betrieb ist. Dies ermöglicht einen zusätzlichen effizienten Betrieb des Plasmaerzeugers, da durch den im Seitenkanal verminderten Druck das Plasma einfacher in das Wasser eingebracht werden kann.

In einer Ausführungsform weist die Vorrichtung ferner einen Aktivkohlefilter auf, wobei der Aktivkohlefilter eingerichtet ist, Nitrate und/oder Nitrite und/oder Wasserstoffperoxid auszufiltern. Der Filter kann dabei in einer Fließrichtung hinter der Zelle angeordnet sein und dadurch überschüssige, durch das Plasma erzeugte Stoffe ausfiltern.

Ein Verfahren zum Betrieb einer Vorrichtung zum Deionisieren von Wasser umfasst die folgenden Schritte: Einbringen von angeregten Ionen in das Wasser mittels einer Aktivierungsvorrichtung sowie kapazitives Deionisieren von Wasser. Durch die angeregten Ionen kann ein pH-Wert des Wassers gesenkt werden und so eine Degradation von Elektroden einer Zelle zum kapazitiven Deionisieren vermieden werden.

Erfindungsgemäß erfolgt das Einbringen der angeregten Ionen mittels eines Plasmaerzeugers. Plasmaerzeuger sind gut geeignet, angeregte Ionen in das Wasser einzubringen.

Erfindungsgemäß ist der Plasmaerzeuger in einem Seitenkanal vor der Zelle angeordnet. Im Seitenkanal liegt ein geringerer Druck an als in einem Hauptkanal. Dadurch kann das Eindringen des Plasmas in das zu deionisierende Wasser vereinfacht werden.

In einer Ausführungsform des Verfahrens wird ein Stickstoffplasma mittels des Plasmaerzeugers erzeugt. Dabei kann es vorgesehen sein, dass durch das Stickstoffplasma das zu deionisierende Wasser in Nitrate und/oder Nitrite und/oder protonierte Wassermoleküle und/oder Wasserstoffperoxide umgesetzt wird. Die genannten Stoffe sind geeignet, den pH-Wert des Wassers zu senken und dadurch die Degradation der Elektroden, insbesondere wenn sie kohlenstoffbasiert sind, zu verringern und dabei ähnlich wie die aus dem Stand der Technik bekannte Zitronensäure zu wirken. Dadurch kann eine Degradation der Elektroden verringert werden. Alternativ kann auch ein Luftplasma verwendet werden.

Ausführungsbeispiele der Erfindung werden anhand der folgenden Zeichnungen erläutert. In der schematischen Zeichnung zeigen:
- Fig. 1: einen Querschnitt durch eine Vorrichtung zum Deionisieren von Wasser; und
- Fig. 2: einen Querschnitt durch ein erfindungsgemäßes Ausführungsbeispiel einer Vorrichtung zum Deionisieren von Wasser.

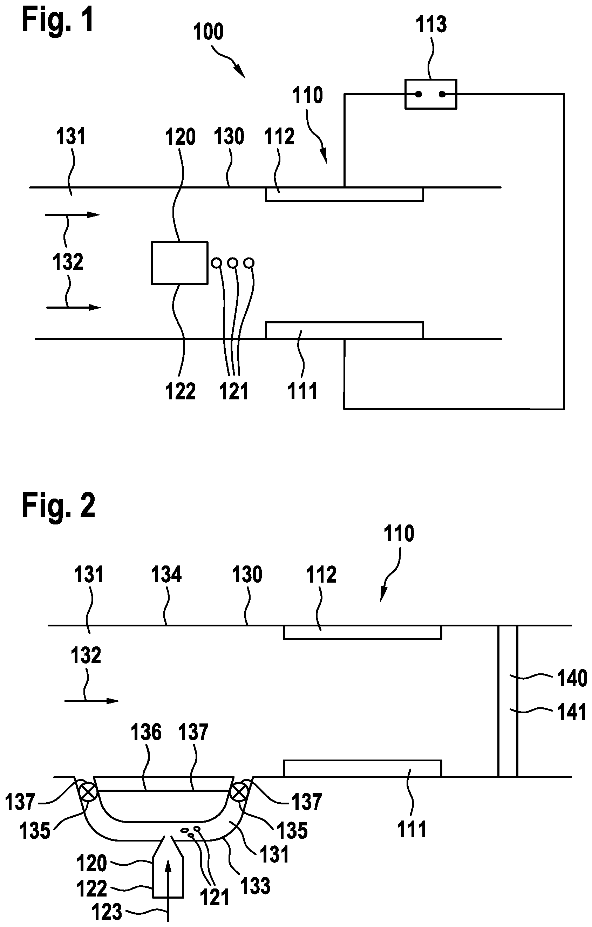

Fig. 1 zeigt eine Vorrichtung 100 zum Deionisieren von Wasser 131 mit einer Zelle 110, wobei die Zelle 110 eine erste Elektrode 111 und eine zweite Elektrode 112 aufweist, die jeweils mit einer Spannungsquelle 113 verbunden sind. Mittels der Spannungsquelle 113 kann eine Spannung an die erste Elektrode 111 beziehungsweise die zweite Elektrode 112 angelegt werden, wobei dadurch mittels der Zelle 110 das Wasser 131 kapazitiv deionisiert werden kann.

Die Zelle 110 ist dabei in einem Rohr 130 angeordnet. In einer Fließrichtung 132 vor der Zelle 110 ist innerhalb des Rohres 130 eine Aktivierungsvorrichtung 120 angeordnet. Mittels der Aktivierungsvorrichtung 120 können angeregte Ionen 121 in das Wasser 131 eingebracht werden. Die angeregten Ionen 121 können mit dem Wasser 131 reagieren und dadurch einen pH-Wert innerhalb des Wassers 131 senken und so eine Degradation der ersten Elektrode 111 beziehungsweise der zweiten Elektrode 112 verringern, insbesondere wenn die Elektroden 111, 112 kohlenstoffbasiert aufgebaut sind, beispielsweise als Graphitelektroden.

Die Aktivierungsvorrichtung 120 ist als Plasmaerzeuger 122 ausgestaltet, wobei mittels eines durch den Plasmaerzeuger 122 erzeugten Plasmas die angeregten Ionen 121 bereitgestellt werden. Dabei kann es vorgesehen sein, dass der Plasmaerzeuger 122 eingerichtet ist, ein Stickstoffplasma zu erzeugen, beispielsweise innerhalb des Rohres 130. Die positiv geladenen Stickstoffatome des Stickstoffplasmas können dann mit dem Wasser 131 reagieren und dabei Nitrate und/oder Nitrite und/oder protonierte Wassermoleküle und/oder Wasserstoffperoxide bilden. Durch diese Substanzen wird der pH-Wert innerhalb des Wassers 131 gesenkt und somit werden die Elektroden 111, 112 weniger angegriffen beziehungsweise gereinigt. Dadurch kann vermieden werden, Zitronensäure in das Rohr 130 einzubringen wie aus dem Stand der Technik bekannt. Alternativ kann auch ein Luftplasma erzeugt werden.

Fig. 2 zeigt einen Querschnitt durch ein erfindungsgemäßes Ausführungsbeispiel einer Vorrichtung 100 zum Deionisieren von Wasser 131, die der Vorrichtung 100 der Fig. 1 entspricht, sofern im Folgenden keine Unterschiede beschrieben sind. Der besseren Übersichtlichkeit halber wurde auf die Darstellung der Spannungsquelle 113 verzichtet, zwischen erster Elektrode 111 und zweiter Elektrode 112 kann jedoch weiterhin eine Spannung angelegt werden. In Fließrichtung 132 vor der Zelle 110 ist ein Seitenkanal 133 angeordnet, wobei der Seitenkanal 133 zumindest abschnittsweise parallel zu einem Hauptkanal 134 des Rohrs 130 geführt ist. Die Aktivierungsvorrichtung 120, die wiederum als Plasmaerzeuger 122 ausgestaltet ist, ist im Seitenkanal 133 angeordnet. Dabei kann ein Stickstoffstrom 123 innerhalb des Plasmaerzeugers 122 zu einem Stickstoffplasma umgesetzt werden, beispielsweise durch Anlegen einer Spannung an den Plasmaerzeuger 122. Das Stickstoffplasma tritt dann aus dem Plasmaerzeuger 122 in den Seitenkanal 133 ein und reagiert dort mit dem Wasser 131, welches sich innerhalb des Seitenkanals 133 befindet. Dabei können wiederum die positiv geladenen Stickstoffatome und das zu deionisierende Wasser 131 in Nitrate und/oder Nitrite und/oder protonierte Wassermoleküle und/oder Wasserstoffperoxide umgesetzt werden.

Ebenfalls in Fig. 2 dargestellt, jedoch optional sind zwei Pumpen 135, die dem Seitenkanal 133 zugeordnet sind. Dabei ist der Plasmaerzeuger 122 zwischen den Pumpen 135 angeordnet. Mittels der Pumpen 135 ist also der Seitenkanal 133 vom Hauptkanal 134 getrennt. Ebenfalls optional ist eine Verbindungsstange 136, mit der die Pumpen 135 gekoppelt sind. Die Pumpen 135 und die Verbindungsstange 136 bilden also eine gekoppelte Turbinen-Pumpen-Einheit 137, die es ermöglicht, einen Druck im Seitenkanal 133 anders einzustellen als im Hauptkanal 134. Dabei kann es insbesondere sein, dass das Wasser 131 im Hauptkanal 134 etwa 5 Bar Druck aufweist, während das Wasser 131 im Seitenkanal 133 etwa 0,5 Bar Druck aufweist.

Durch die mittels des Plasmaerzeugers 122 zugeführte Luft kann erreicht werden, dass durch den geringeren Druck im Seitenkanal 133 und den Stickstoffstrom 123 erreicht wird, dass kein Wasser 131 aus dem Seitenkanal 133 in den Plasmaerzeuger 122 eintritt.

Es kann vorgesehen sein, Umgebungsluft in den Plasmaerzeuger 122 einzubringen und somit auf ein zusätzliches Gasreservoir verzichten zu können. Mittels des Plasmaerzeugers 122 kann dann ein Luftplasma erzeugt werden. Alternativ kann der Plasmaerzeuger 122 (ebenso in Fig. 1) einen Anschluss für eine Gasflasche aufweisen, an den eine Stickstoffflasche angeschlossen werden kann. Im ersten Fall wird ein kostengünstiger Betrieb der Vorrichtung 100 zum Deionisieren von Wasser 131 ermöglicht. Im zweiten Fall kann ein reines Stickstoffplasma erzeugt werden.

Die mittels des Plasmaerzeugers 122 erzeugten Nitrate und/oder Nitrite und/oder protonierten Wassermoleküle und/oder Wasserstoffperoxide wird der pH-Wert innerhalb des Wassers 131 innerhalb des Seitenkanals 133 gesenkt. Mittels der Pumpen 135 gelangen die erzeugten Nitrate und/oder Nitrite und/oder protonierten Wassermoleküle und/oder Wasserstoffperoxide zu den Elektroden 111, 112, was wiederum dazu führt (analog zu Fig. 1), dass die Elektroden 111, 112 weniger angegriffen beziehungsweise gereinigt werden. Auch in diesem Ausführungsbeispiel kann auf den Einsatz von Zitronensäure zur Reinigung der Elektroden 111, 112 verzichtet werden.

Ebenfalls in Fig. 2 dargestellt ist ein optionaler Filter 140, der als Aktivkohlefilter 141 ausgestaltet sein kann. Der Filter 140 beziehungsweise Aktivkohlefilter 141 kann eingerichtet sein, Nitrate beziehungsweise Nitrite beziehungsweise Wasserstoffperoxid auszufiltern. Der Filter 140 ist hierzu in Fließrichtung 132 hinter der Zelle 110 angeordnet, sodass die durch das Plasma innerhalb des Wassers 131 erzeugten Stoffe hinter der Zelle 110 wieder ausgefiltert werden können. Der Filter 140 kann analog auch in der Vorrichtung 100 der Fig. 1 vorgesehen sein. Insbesondere Nitrate und/oder Nitrite können von dem Filter 140 ausgefiltert werden. Dadurch kann erreicht werden, dass das Wasser 131 hinter dem Filter 140 frei von Nitraten und/oder Nitriten ist.

Neben der in Figur 2 gezeigten Vorrichtung 100 umfasst die Erfindung auch ein Betriebsverfahren für diese Vorrichtung, bei dem angeregte Ionen 121 in das Wasser 131 mittels der Aktivierungsvorrichtung 120 eingebracht werden und anschließend in der Zelle 110 das Wasser 131 kapazitiv deionisiert wird. Dabei kann es vorgesehen sein, die angeregten Ionen 121 mittels eines Plasmaerzeugers 122 einzubringen.

In einem Ausführungsbeispiel des Verfahrens wird mittels des Plasmaerzeugers 122 ein Stickstoffplasma erzeugt und dadurch das zu deionisierende Wasser 131 in Nitrate und/oder Nitrite und/oder protonierte Wassermoleküle und/oder Wasserstoffperoxide umgesetzt.

Gemäß der Erfindung ist vorgesehen, den Plasmaerzeuger 122 in einem Seitenkanal 133 vor der Zelle 110 anzuordnen, wobei im Seitenkanal 133 ein geringerer Druck anliegt als in einem Hauptkanal 134. Der Druck im Hauptkanal 134 kann dabei beispielsweise in der Größenordnung von 5 Bar liegen, während der Druck im Seitenkanal 133 in der Größenordnung von etwa 0,5 Bar liegt. Der Druck im Hauptkanal 134 kann beispielsweise das Zehnfache des Drucks im Seitenkanal 133 betragen.

Obwohl die Erfindung im Detail durch die bevorzugten Ausführungsbeispiele beschrieben wurde, ist die Erfindung nicht auf die offenbarten Beispiele eingeschränkt und andere Variationen können hieraus vom Fachmann abgeleitet werden, ohne den in den folgenden Ansprüchen definierten Schutzumfang der Erfindung zu verlassen.

## Patentansprüche

1. Vorrichtung (100) zum Deionisieren von Wasser (131), ausweisend eine Zelle (110) mit zwei Elektroden (111, 112) zum kapazitiven Deionisieren des Wassers (131) und eine Aktivierungsvorrichtung (120), wobei mittels der Aktivierungsvorrichtung (120) angeregte Ionen (121) in das Wasser (131) eingebracht werden können, wobei die Aktivierungsvorrichtung (120) einen Plasmaerzeuger (122) beinhaltet, wobei der Plasmaerzeuger (122) in einem Seitenkanal (133) vor der Zelle (110) angeordnet ist.

2. Vorrichtung (100) nach Anspruch 1, wobei der Plasmaerzeuger (122) eingerichtet ist, ein Stickstoffplasma zu erzeugen und dadurch zu deionisierendes Wasser (131) in Nitrate und/oder Nitrite und/oder protonierte Wassermoleküle und/oder Wasserstoffperoxide umgesetzt wird.

3. Vorrichtung (100) nach Anspruch 1, wobei der Plasmaerzeuger (122) eingerichtet ist, ein Luftplasma zu erzeugen und dadurch zu deionisierendes Wasser (131) in Nitrate und/oder Nitrite und/oder protonierte Wassermoleküle und/oder Wasserstoffperoxide umgesetzt wird.

4. Vorrichtung (100) nach einem der Ansprüche 1 bis 3, wobei der Seitenkanal (133) mittels einer gekoppelten Turbinen-Pumpen-Einheit (137) von einem Hauptkanal (134) abgetrennt ist, wobei im Seitenkanal (133) ein geringerer Druck anliegt als im Hauptkanal (134), wenn die gekoppelte Turbinen-Pumpen-Einheit (137) in Betrieb ist.

5. Vorrichtung (100) nach einem der Ansprüche 1 bis 4, ferner aufweisend einen Aktivkohlefilter (141), wobei der Aktivkohlefilter (141) eingerichtet ist, Nitrate und Nitrite auszufiltern.

6. Verfahren zum Betrieb einer Vorrichtung (100) zum Deionisieren von Wasser (131) nach einem der Ansprüche 1 bis 5, mit den Schritten:
- Einbringen von angeregten Ionen (121) in das Wasser (131) mittels einer Aktivierungsvorrichtung (120);
- Kapazitives Deionisieren von Wasser (131);
wobei das Einbringen der angeregten Ionen (121) mittels eines Plasmaerzeugers (122) erfolgt, wobei der Plasmaerzeuger (122) in einem Seitenkanal (133) vor der Zelle (110) angeordnet ist und wobei im Seitenkanal (133) ein geringerer Druck anliegt als in einem Hauptkanal (134).

## Claims

1. Apparatus (100) for deionizing water (131), comprising a cell (110) having two electrodes (111, 112) for capacitively deionizing the water (131), and having an activating apparatus (120), it being possible for excited ions (121) to be introduced into the water (131) by means of the activating apparatus (120), the activating apparatus (120) including a plasma generator (122), the plasma generator (122) being disposed in a side channel (133) upstream of the cell (110).

2. Apparatus (100) according to Claim 1, wherein the plasma generator (122) is configured to generate a nitrogen plasma and thereby water (131) for deionization is converted into nitrates and/or nitrites and/or protonated water molecules and/or hydrogen peroxides.

3. Apparatus (100) according to Claim 1, wherein the plasma generator (122) is configured to generate an air plasma and thereby water (131) for deionization is converted into nitrates and/or nitrites and/or protonated water molecules and/or hydrogen peroxides.

4. Apparatus (100) according to any of Claims 1 to 3, wherein the side channel (133) is separated from a main channel (134) by means of a coupled turbine-pump assembly (137), the pressure in the side channel (133) being lower than in the main channel (134) when the coupled turbine-pump assembly (137) is in operation.

5. Apparatus (100) according to any of Claims 1 to 4, further comprising an activated carbon filter (141), the activated carbon filter (141) being configured to filter out nitrates and nitrites.

6. Method for operating an apparatus (100) for deionizing water (131) according to any of Claims 1 to 5, with the steps of:
- introducing excited ions (121) into the water (131) by means of an activating apparatus (120);
- capacitively deionizing water (131);
wherein the excited ions (121) are introduced by means of a plasma generator (122), the plasma generator (122) being disposed in a side channel (133) upstream of the cell (110) and the pressure in the side channel (133) being lower than in a main channel (134).

## Revendications

1. Dispositif (100) de désionisation d'eau (131), comportant une cellule (110) avec deux électrodes (111, 112) pour la désionisation capacitive de l'eau (131) et un dispositif d'activation (120), des ions (121) excités par le dispositif d'activation (120) pouvant être introduits dans l'eau (131), le dispositif d'activation (120) contenant un générateur de plasma (122), le générateur de plasma (122) étant disposé dans un canal latéral (133) devant la cellule (110).

2. Dispositif (100) selon la revendication 1, dans lequel le générateur de plasma (122) est agencé pour produire un plasma d'azote, et l'eau (131) à désioniser par ce dernier est convertie en nitrates et/ou nitrites et/ou molécules d'eau protonées et/ou peroxydes d'hydrogène.

3. Dispositif (100) selon la revendication 1, dans lequel le générateur de plasma (122) est conçu pour produire un plasma d'air, et l'eau (131) à désioniser par ce dernier est convertie en nitrates et/ou nitrites et/ou molécules d'eau protonées et/ou peroxydes d'hydrogène.

4. Dispositif (100) selon l'une des revendications 1 à 3, dans lequel le canal latéral (133) est, à l'aide d'une unité couplée turbine-pompe (137), séparé d'un canal principal (134), une pression étant appliquée dans le canal latéral (133), qui est inférieure à celle dans le canal principal (134) quand l'unité de turbine-pompe couplée (137) est en marche.

5. Dispositif (100) selon l'une des revendications 1 à 4, comprenant en outre un filtre à charbon actif (141), le filtre à charbon actif (141) étant conçu pour séparer par filtration les nitrates et les nitrites.

6. Procédé d'exploitation d'un dispositif (100) de désionisation d'eau (131) selon l'une des revendications 1 à 5, comportant les étapes suivantes :
- introduction d'ions excités (121) dans l'eau (131) à l'aide d'un dispositif d'activation (120) ;
- désionisation capacitive de l'eau (131) ;
l'introduction des ions excités (121) ayant lieu à l'aide d'un générateur de plasma (122), le générateur de plasma (122) étant disposé dans un canal latéral (133) avant la cellule (110), une pression étant appliquée dans le canal latéral (133), qui est inférieure à celle dans un canal principal (134).
